# FASCICULE DE BREVET EUROPEEN

(11) **EP 2 956 040 B1**
(45) Date de publication et mention de la délivrance du brevet: **21.08.2019**
(21) Numéro de dépôt: 14702868.2
(22) Date de dépôt: 06.02.2014
(51) Int. Cl.: A47J 43/06, A47J 43/08, A47J 43/07

(54) **UNITÉ D'ENTRAÎNEMENT POUR PIÈCES D'APPAREIL ÉLECTROMÉNAGER**
ANTRIEBSEINHEIT FÜR TEILE EINES ELEKTROHAUSHALTSGERÄTS
DRIVE UNIT FOR HOUSEHOLD APPLIANCE PARTS

(30) Priorité: 15.02.2013 EP 13155415
(43) Date de publication de la demande: 23.12.2015
(73) Titulaire: BaByliss Faco sprl, 4020 Wandre (BE)
(72) Inventeur: JULEMONT, Pierre, B-4630 Soumagne (BE); SMAL, Olivier, B-4623 Magnee (BE)
(74) Mandataire: Pronovem
(86) Numéro de dépôt international: PCT/EP2014/052308
(87) Numéro de publication internationale: WO 2014/124859

(56) Documents cités:
- EP-A1- 1 747 745
- WO-A1-2013/020571
- DE-C- 955 809
- GB-A- 2 456 045
- US-A1- 2002 176 320
- US-A1- 2003 197 080
- US-A1- 2007 046 227
- US-A1- 2007 159 917

## Description

### Objet de l'invention

La présente invention se rapporte à une unité d'entraînement pour pièces d'appareil électroménager, et en particulier à une unité d'entraînement sans fil pour des outils de transformation culinaire comportant un moteur sans balais qui permet de produire un couple de force utilisable pour une large gamme d'outils sans avoir recours à un embrayage. L'unité est aussi bien utilisable dans le cadre d'un mouvement de rotation pour un outil de type mélangeur ou hacheur en position verticale, que dans le cadre d'un mouvement de va-et-vient en position horizontale pour un outil de type couteau.

### Etat de la technique

De nombreuses unités d'entraînement pour pièces d'appareil électroménager comportant des moteurs avec balais sont connues de l'état de la technique.

Le document DE 20 2006 011512 U1 divulgue un tel appareil où les accessoires peuvent être fixés dans le prolongement de la poignée. La poignée ne comporte cependant pas de moyens pour générer un mouvement de rotation ; elle ne comporte qu'un générateur de vibration permettant de faire vibrer les accessoires.

Le document EP 1 787 557 A1 divulgue une unité d'entraînement pour pièces d'appareil électroménager, en particulier pour un mouvement de rotation destiné à un mélangeur/hachoir et un mouvement de translation pour deux couteaux. L'appareil a une tige d'entraînement pour actionner chacune des pièces via un moyen de débrayage pour débrayer les outils en question. Les couteaux sont fixés dans le prolongement de l'axe longitudinal du boitier (Fig.4 de ce document) alors que le mélangeur/hachoir est fixé de manière perpendiculaire à l'axe longitudinal du boitier (Fig.5 de ce document) ou dans le prolongement de l'axe longitudinal (Fig.3 de ce document).

Le document EP 2 198 761 A1 s'attache plus particulièrement à un mécanisme de couplage spécifique d'une unité d'entraînement portable avec des moyens de verrouillage pour un hachoir immergé.

Le document EP 1 230 883 A1 divulgue une machine améliorée de broyage de produits alimentaires où l'accessoire de broyage est adapté dans l'axe longitudinal avec des moyens de couplage particuliers.

Le document GB 2456045 A divulgue également une unité d'entrainement pour un outil culinaire avec une série de fonctions. Ce document ne divulgue pas l'utilisation d'un moteur sans balais.

Le document WO 2013020571 A1 divulgue une unité d'entrainement pour un outil culinaire exempte d'embrayage de type mélangeur immergé comportant un moteur sans balai.

Le document US 2007/0159917 A1 divulgue une unité d'entraînement portable, motorisée, sans fil , en forme de poignée et exempte d'embrayage pour des outils de préparation culinaire, le moteur comportant un accouplement adapté pour être fixé amovible à un outil de transformation des aliments situé dans le prolongement de la poignée. L'unité est utilisable aussi bien en position horizontale qu'en position verticale par l'intermédiaire d'un interrupteur d'activation d'appui permanent situé sur la poignée.

### But de l'invention

La présente invention vise à surmonter les inconvénients de l'état de la technique, et en particulier à fournir une unité d'entraînement qui permet d'adapter des ustensiles de cuisine sur l'accouplement unique d'un moteur sans balai dans le prolongement de la poignée, sans nécessité d'embrayage et de reconnaître l'outil fixé sur l'unité par un moyen d'identification pour adapter les vitesses des outils de transformation des aliments à leur fonction.

### Résumé de l'invention

La présente invention divulgue une unité d'entraînement portable motorisée, sans fil, en forme de poignée et exempte d'embrayage, pour des outils de préparation culinaire, le moteur étant un moteur sans balai comportant un accouplement adapté pour être fixé amovible à un outil de transformation des aliments situé dans le prolongement ladite poignée caractérisé en ce que ladite unité est utilisable aussi bien en position horizontale qu'en position verticale, par l'intermédiaire d'un interrupteur d'activation d'appui permanent situé sur la poignée lorsque l'unité est utilisée en position verticale ou sur l'outil lorsque l'unité est utilisée en position horizontale et que ladite unité comporte un moyen d'identification du type d'outil permettant d'adapter la vitesse du moteur au type d'outil choisi par l'utilisateur.

Selon des modes d'exécution particuliers, l'invention comporte une ou plusieurs des caractéristiques suivantes :
- L'unité d'entraînement comporte plusieurs positions de vitesse de rotation situées entre 6000 et 15000 tours par minute.
- Le moyen d'identification de l'outil est un système à trois points de contact permettant d'identifier sept outils différents.

La présente invention divulgue également un ensemble comportant une unité et des outils de transformation des aliments, par exemple un mélangeur à immerger, un hachoir ou un couteau à double lame.

### Brève description des figures

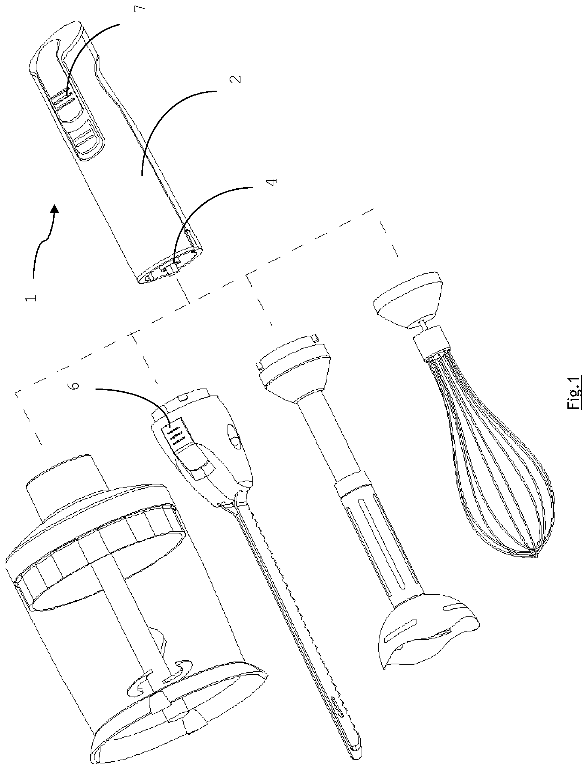

La figure 1 représente une vue en trois dimensions de l'unité selon l'invention avec comme exemples d'outils, un mélangeur à immerger, un hachoir, un couteau à double lame et un fouet.

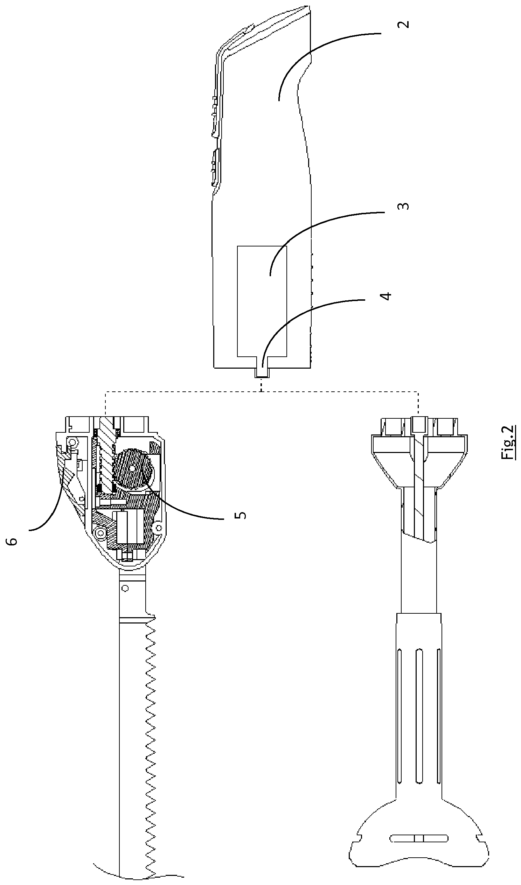

La figure 2 représente une vue en coupe avec l'unité d'entraînement portable selon l'invention et deux accessoires possibles pouvant être adaptés de manière amovible sur l'accouplement unique pour une utilisation en position horizontale (couteau) et en position verticale (mélangeur).

La figure 3 représente l'unité selon l'invention en position d'utilisation horizontale avec un moyen mécanique d'identification de l'outil.

Les figures 4 et 5 représentent l'unité selon l'invention en position d'utilisation verticale avec un moyen mécanique d'identification de l'outil.

### Liste des symboles de référence

- 1 :: unité d'entraînement selon l'invention
- 2 :: poignée
- 3 :: moteur sans balai
- 4 :: accouplement
- 5 :: came
- 6 :: interrupteur d'appui permanent pour l'utilisation en position horizontale se trouvant sur l'outil.
- 7 :: interrupteur d'appui permanent pour l'utilisation en position verticale
- 8 :: moyen d'identification du type d'outil
- 9 :: interrupteur de sélection d'outil

### Description détaillée de l'invention

L'invention est illustrée dans les figures de la description à l'aide des références numériques. L'unité d'entraînement 1 selon l'invention comporte un moteur 3 sans balai ne nécessitant aucun embrayage pour adapter les vitesses des ustensiles de cuisine utilisés. Un moteur 3 sans balais (« *brushless* ») est un moteur synchrone autopiloté électroniquement et à aimant permanent. Ce type de moteur permet de maintenir un couple de force acceptable dans une large gamme de nombre de tours par minute, raison pour laquelle un appareil muni de ce type de moteur n'a pas besoin d'embrayage.

L'unité selon l'invention 1 possède un accouplement unique 4 directement à la sortie du moteur 3 sur lequel viennent s'adapter les outils de transformation des aliments dans le prolongement de la poignée 2.

L'unité 1 est une unité portable, de préférence sans fil, munie d'un accumulateur rechargeable, ce qui permet un maniement très facile.

Les outils de transformation des aliments sont munis de réducteurs pour adapter leur vitesse de rotation à l'utilisation désirée. Pour le cas du couteau à double lame, en plus de la réduction, il y a une came 5 permettant de transformer le mouvement de rotation du moteur en un mouvement de va-et-vient.

L'unité selon l'invention peut produire une large gamme de vitesses de rotation tout en maintenant un couple de force acceptable pour l'utilisation requise. Les vitesses de rotation utilisées se situent dans des plages allant de 3000 à 18000 tours par minute, de préférence de 6000 à 15000 tours par minute, et de manière particulièrement préférée de 8000 à 14000 tours par minute.

L'unité d'entraînement 1 est munie d'un moyen d'identification 8 d'outil de transformation des aliments afin de sélectionner électroniquement la vitesse de rotation du moteur la plus adéquate.

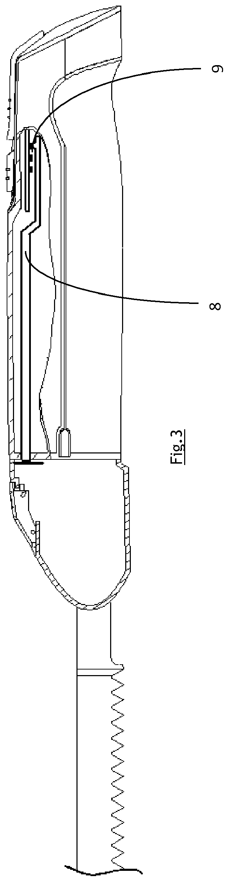

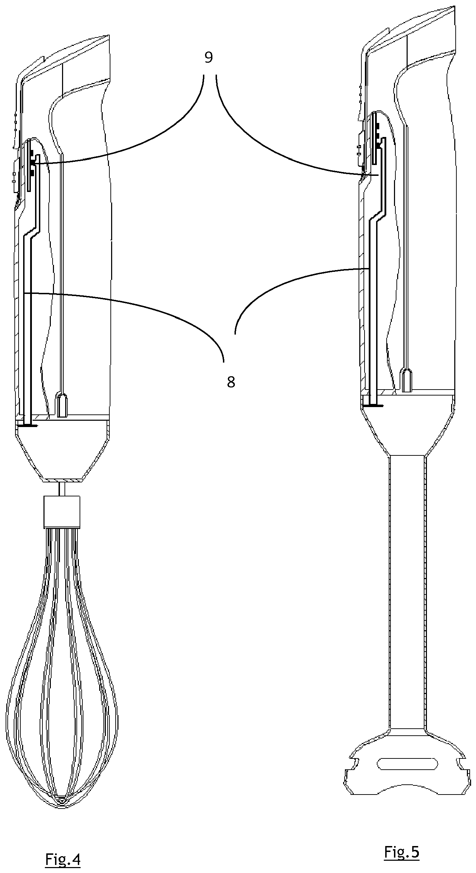

Les outils de transformation peuvent être assez divers mais l'équipement de base de ce type de machine comporte généralement cinq pièces : un couteau, un hachoir à immersion, et un fouet en tant qu'outils de transformation ainsi qu'un petit bol et un grand bol. Chaque outil est doté d'un système d'identification 8 électronique ou mécanique permettant au microcontrôleur (non représenté) ou à un interrupteur de sélection d'outil 9 (voir Fig.3, 4 et 5) de détecter l'outil connecté et donc d'adapter les caractéristiques moteur en fonction de l'outil choisi.

Pour une identification électronique de l'outil utilisé, une des possibilités est l'utilisation d'un système par trois points de contacts réalisés avec des ergots en métal sous forme de billes ou de lames ressorts (de type connecteur de batterie de téléphone portable). Par trois points de contact, il est possible d'identifier sept outils.
Le tableau ci-dessous représente un exemple d'identification pour cinq accessoires.

| **Point de contact 1** | **Point de contact 2** | **Point de contact 3** | **Accessoire** |
|---|---|---|---|
| Non actif (0) | Non actif (0) | Non actif (0) | / |
| Non actif (0) | Non actif (0) | Actif (1) | Couteau |
| Non actif (0) | Actif (1) | Non actif (0) | Hachoir à immersion |
| Non actif (0) | Actif (1) | Actif (1) | Petit bol |
| Actif (1) | Non actif (0) | Non actif (0) | Grand bol |
| Actif (1) | Non actif (0) | Actif (1) | Fouet |

Les avantages d'un tel système sont une identification rapide et simple à mettre en oeuvre. Il faut cependant assurer une étanchéité, éviter l'oxydation ainsi que l'usure des contacts. Ce système nécessité également deux contacts supplémentaires pour la tension et la masse et une connexion vers le microcontrôleur.

L'identification est également possible grâce à la mesure du champ magnétique généré par un aimant selon plusieurs variantes :
- Chaque outil peut être équipé d'un aimant de force différente pour permettre son identification. Un tel système assure une étanchéité mais nécessité autant d'aimants différents que d'outils. Il n'a cependant besoin que d'un seul capteur à effet Hall afin de détecter le champ magnétique des différents aimants.
- Une alternative peut être mise en oeuvre en jouant sur le nombre d'aimants. Chaque outil est alors équipé, d'un, de deux ou de trois aimants. Le système est semblable à l'identification par trois points de contact et permet d'assurer l'étanchéité. Il est possible d'identifier sept accessoires grâce à ces trois aimants.
La poignée 2, quant à elle, possède trois capteurs à effet Hall.
Le tableau ci-dessous représente un exemple d'identification pour cinq accessoires.

| **Capteur à effet Hall 1** | **Capteur à effet Hall 2** | **Capteur à effet Hall 3** | **Accessoire** |
|---|---|---|---|
| Non actif (0) | Non actif (0) | Non actif (0) | / |
| Non actif (0) | Non actif (0) | Actif (1) | Couteau |
| Non actif (0) | Actif (1) | Non actif (0) | Hachoir à immersion |
| Non actif (0) | Actif (1) | Actif (1) | Petit bol |
| Actif (1) | Non actif (0) | Non actif (0) | Grand bol |
| Actif (1) | Non actif (0) | Actif (1) | Fouet |

Un tel système assure une étanchéité mais nécessité trois capteurs à effet Hall afin de détecter le champ magnétique de trois aimants. De plus, chaque capteur nécessite une connexion vers le microcontrôleur.
- Une autre alternative est de varier le positionnement des aimants. Chaque outil possède dans ce cas un seul aimant positionné à un endroit différent. L'unité d'entrainement 1, quant à elle, possède autant de capteurs à effet Hall que d'outils. En fonction du capteur qui reçoit le champ magnétique, il est possible d'identifier l'outil connecté.
- Il est également possible de n'utiliser qu'un seul capteur à effet Hall qui mesure le champ magnétique global. En fonction de la distance, le champ magnétique est plus fort ou plus faible. On sait donc détecter les différents outils en fonction du champ magnétique perçu.

Une autre variante est l'identification par micro-switches, qui est similaire au principe par contact via trois ergots sur l'outil qui viennent appuyer sur trois interrupteurs inclus dans l'unité d'entraînement 1. L'avantage d'un tel système est que l'étanchéité ne doit être mise en oeuvre que sur la poignée 2. Cependant, vu le système d'ergots, il faut assurer une résistance mécanique suffisante afin d'éviter la détérioration. De plus, chaque interrupteur nécessite une connexion vers le microcontrôleur.

Enfin, la détection est possible par mesure de caractéristiques électriques. Le principe repose sur la mesure d'un courant afin de détecter l'outil attaché à la poignée 2. Chaque outil est doté d'une résistance différente. Le courant mesuré sera donc différent pour chaque accessoire. Les contacts peuvent être des billes, des tiges ou des lames ressort. L'avantage d'un tel système est qu'il ne nécessite que deux connexions entre l'outil et la poignée. De plus la mesure s'effectue uniquement sur deux fils qui n'encombrent donc pas l'unité d'entraînement 1. Cependant, il faut toujours assurer l'étanchéité des contacts. Le contact le plus simple à mettre en oeuvre est le contact par billes.

## Revendications

1. Unité d'entraînement portable (1) motorisée, sans fil, en forme de poignée (2) et exempte d'embrayage, pour des outils de préparation culinaire, le moteur (3) étant un moteur sans balai comportant un accouplement (4) adapté pour être fixé amovible à un outil de transformation des aliments situé dans le prolongement ladite poignée (2) **caractérisé en ce que** ladite unité (1) est utilisable aussi bien en position horizontale qu'en position verticale, par l'intermédiaire d'un interrupteur d'activation d'appui permanent (6,7) situé sur la poignée (2) lorsque l'unité est utilisée en position verticale ou sur l'outil lorsque l'unité (1) est utilisée en position horizontale et que ladite unité comporte un moyen d'identification (8) du type d'outil permettant d'adapter la vitesse du moteur au type d'outil choisi par l'utilisateur.

2. Unité d'entraînement (1) selon la revendication 1, **caractérisée en ce qu'**elle comporte plusieurs positions de vitesse de rotation situées entre 6000 et 15000 tours par minute.

3. Unité d'entraînement (1) selon la revendication 1 ou 2, **caractérisée en ce que** le moyen d'identification de l'outil est un système à trois points de contact permettant d'identifier sept outils différents.

4. Ensemble comportant une unité d'entraînement 1 selon l'une quelconque des revendications précédentes et des outils de transformation des aliments.

5. Ensemble selon la revendication 4, comportant comme outils de transformation des aliments, un mélangeur à immersion, un hachoir, un fouet ou un couteau à double lame.

## Patentansprüche

1. Kabellose motorisierte tragbare Antriebseinheit (1) in Form eines Griffs (2) und ohne Kupplung für kulinarische Zubereitungswerkzeuge, wobei der Motor (3) ein bürstenloser Motor ist, welcher eine Koppelung (4) umfasst, die geeignet ist, lösbar an einem Werkzeug zum Verarbeiten von Nahrungsmitteln, das sich in der Verlängerung des Griffs (2) befindet, befestigt zu sein, **dadurch gekennzeichnet, dass** die Einheit (1) sowohl in horizontaler Position als auch in vertikaler Position mittels eines Tastschalters (6, 7) verwendbar ist, welcher sich auf dem Griff (2), wenn die Einheit in horizontaler Position verwendet wird, oder auf dem Werkzeug, wenn die Einheit (1) in horizontaler Position verwendet wird, befindet, und dass die Einheit ein Identifizierungsmittel (8) des Werkzeugtyps umfasst, das erlaubt, die Geschwindigkeit des Motors an den von dem Benutzer ausgewählten Werkzeugtyp anzupassen.

2. Antriebseinheit (1) nach Anspruch 1, **dadurch gekennzeichnet, dass** sie mehrere Drehzahlstufen, die zwischen 6000 und 15000 Umdrehungen pro Minute liegen, umfasst.

3. Antriebseinheit (1) nach Anspruch 1 oder 2, **dadurch gekennzeichnet, dass** das Identifikationsmittel des Werkzeugs ein System mit drei Kontaktpunkten ist, das erlaubt, sieben unterschiedliche Werkzeuge zu identifizieren.

4. Anordnung, die eine Antriebseinheit 1 nach irgendeinem der vorangehenden Ansprüche und Verarbeitungswerkzeuge von Nahrungsmitteln umfasst.

5. Anordnung nach Anspruch 4, die als Verarbeitungswerkzeuge von Nahrungsmitteln einen Mixstab, einen Zerkleinerer, einen Schneebesen oder ein Messer mit doppelter Klinge umfasst.

## Claims

1. A cordless motorized portable drive unit (1), in the form of a handle (2) and with no clutch, for food processing tools, the motor (3) being a brushless motor comprising a coupling (4) that is suitable for being removably fastened to a food processing tool situated in the extension of said handle (2), **characterized in that** said unit (1) can be used both in a horizontal position and a vertical position, by means of a permanent bearing activation switch (6, 7) situated on the handle (2) when the unit is used in the vertical position or on the tool when the unit (1) is used in a horizontal position, and **in that** said unit comprises means (8) for identifying the type of tool allowing to adapt the speed of the motor to the type of tool chosen by the user.

2. The drive unit (1) according to Claim 1, **characterized in that** it comprises several rotational speed positions situated between 6,000 and 15,000 revolutions per minute.

3. The drive unit (1) according to Claim 1 or 2, **characterized in that** the tool identification means is a system with three points of contact allowing to identify seven different tools.

4. An assembly comprising a drive unit (1) according to any one of the preceding claims and food processing tools.

5. The assembly according to Claim 4, comprising, as food processing tools, an immersion blender, a chopper, a whisk or a double-bladed knife.
